# EUROPÄISCHE PATENTSCHRIFT

(11) **EP 2 726 719 B1**
(45) Veröffentlichungstag und Bekanntmachung des Hinweises auf die Patenterteilung: **11.03.2015**
(21) Anmeldenummer: 12723699.0
(22) Anmeldetag: 25.05.2012
(51) Int. Cl.: F02D 9/10, F16K 1/22

(54) **VENTILVORRICHTUNG ZUR REGELUNG EINES ABGASSTROMS EINER VERBRENNUNGSKRAFTMASCHINE**
VALVE DEVICE FOR CONTROLLING AN EXHAUST GAS FLOW OF AN INTERNAL COMBUSTION ENGINE
DISPOSITIF À SOUPAPE DESTINÉ À RÉGULER UN FLUX DE GAZ D'ÉCHAPPEMENT D'UN MOTEUR À COMBUSTION INTERNE

(30) Priorität: 28.06.2011 DE 102011106744
(43) Veröffentlichungstag der Anmeldung: 07.05.2014
(73) Patentinhaber: Pierburg GmbH, 41460 Neuss (DE)
(72) Erfinder: GERARDS, Hans, 52538 Gangelt (DE); BLOMERIUS, Harald, 50735 Köln (DE)
(74) Vertreter: Patentanwälte ter Smitten Eberlein Rütten Partnerschaftsgesellschaft
(86) Internationale Anmeldenummer: PCT/EP2012/059854
(87) Internationale Veröffentlichungsnummer: WO 2013/000643

(56) Entgegenhaltungen:
- EP-A1- 1 455 124
- EP-A1- 1 707 780
- EP-A2- 1 489 285

## Beschreibung

Die Erfindung betrifft eine Ventilvorrichtung zur Regelung eines Abgasstroms einer Verbrennungskraftmaschine mit einer Welle, die drehbar um eine Wellenachse in einem einen durchströmbaren Kanal bildenden Gehäuse gelagert ist, einer Klappe, die mit der Welle verbunden ist und über die der Durchströmungsquerschnitt des Kanals regelbar ist, wobei die Klappe zwei biegesteife Stützscheiben mit einem ersten Umfang und einen zwischen den Stützscheiben angeordneten, elastischen Klappenkörper mit einem allseitig größeren Umfang aufweist.

Derartige Ventilvorrichtungen können beispielsweise als Abgasrückführklappen oder Abgasklappen eingesetzt werden. Bekannt ist die Verwendung solcher Klappen, insbesondere als Drosselklappen auch in Luft führenden Leitungen. Bei der Verwendung als Abgasrückführklappe ist es notwendig, dass einerseits ein möglichst dichter Verschluss des Kanals im geschlossenen Zustand der Klappe erfolgt und andererseits eine gute Regelbarkeit des Volumenstroms erreicht wird. Des Weiteren ist darauf zu achten, dass eine ausreichende thermische Belastbarkeit im heißen Abgasstrang gegeben ist.

Es sind verschiedene Ausführungen solcher mehrtelliger Klappen bekannt, mit denen eine Verbesserung der Abdichtung im geschlossenen Zustand erreicht werden soll.

So wird in der EP 1 455 124 A1 ein Klappenventil für eine gas- oder flüssigkeitsführende Leitung offenbart, welche exzentrisch gelagert ist und aus einem abströmseitig angeordneten, biegesteifen Element und einem anströmseitig angeordneten, elastischen Federblech besteht. Im Gehäuse ist eine Anschlagkante ausgebildet, gegen die das Federblech im geschlossenen Zustand anliegt. Eine Hälfte des Federbleches weist dabei die gleiche Größe auf, wie das biegesteife Element, wobei diese Hälfte von dem biegesteifen Element wegweisend vorgespannt ist, so dass beim Auflegen auf die Anschlagkante das Federblech gespannt gegen den Anschlag gedrückt wird. Die andere Hälfte des Federbleches ist größer als das biegesteife Element, so dass diese Seite ebenfalls gegen den in entgegengesetzter Richtung im Kanal ausgebildeten Anschlag anliegen kann. Die mögliche Verspannung des Federbleches wird durch die Auflage des biegesteifen Elementes eingeschränkt.

Des Weiteren ist aus der EP 1 489 285 A2 ein Klappenventil bekannt, welches als Drosselklappe genutzt werden kann und aus zwei Stützscheiben und einer zwischen den Stützscheiben angeordneten Elastomerscheibe aufgebaut ist, welche allseitig über den Umfang der Stützscheiben hinaus ragt und deren Außenumfang im geschlossenen Zustand der Klappe gegen die Innenwand des Kanals anliegt. Diese Klappe eignet sich jedoch nicht zur Verwendung im Abgasbereich, da das Elastomer nicht ausreichend thermisch belastbar ist.

Bei allen bekannten Ausführungen besteht der Nachteil, dass relativ hohe Stellkräfte erforderlich sind, um eine ausreichende Dichtigkeit der Ventilvorrichtung im geschlossenen Zustand sicher zu stellen.

Es stellt sich daher die Aufgabe, eine Ventilvorrichtung zu schaffen, mit der sehr geringe Leckagen bei möglichst geringen Stellkräften erreichbar sind. Gleichzeitig soll die Ventilvorrichtung kostengünstig herstellbar sein und eine gute Regelcharakteristik aufweisen.

Diese Aufgabe wird durch eine Ventilvorrichtung mit den Merkmalen des Hauptanspruchs gelöst. Dadurch, dass der Abstand zwischen, dem Außenumfang des elastischen Klappenkörpers und dem Außenumfang der Stützscheiben im Bereich der Wellenachse am größten ist und bei einem Winkel von 90° zur Wellenachse am kleinsten ist, ist die Elastizität im wellennahen Bereich, in dem aufgrund des kleinen Hebelarms die größten Drehmomente aufzubringen sind, um die Klappenkörper gegen eine Gehäusewand anzupressen, am größten. Somit wird ein dichter Verschluss durch eine aufzubringende Anpresskraft bei relativ geringen Stellkräfte des Aktors erreicht.

Vorzugsweise verringert sich der Abstand zwischen dem Außenumfang des elastischen Klappenkörpers und dem Außenumfang der Stützscheiben mit steigendem Winkel zum Schnittpunkt der Wellenachse und der Kanalachse, so dass eine kontinuierliche Verringerung der Elastizität mit wachsendem Abstand von der Wellenachse erreicht wird. So kann über den gesamten Umfang eine gleichmäßige Anpresskraft aufgebracht werden.

In einer bevorzugten Ausführungsform sind der Kanal und der Klappenkörper im Querschnitt kreisförmig und die Stützscheiben im Wesentlichen elliptisch oder in Form eines in einer Richtung gedehnten Kreises ausgebildet. Diese Formen sind einfach herstellbar und montierbar.

Des Weiteren ist es vorteilhaft, wenn der Klappenkörper aus Federstahl ist. Federstahl ist thermisch hoch belastbar, so dass eine Verwedungn im Abgaskanal möglich ist.

In einer besonders bevorzugten Ausführungsform ist im Gehäuse ein Absatz ausgebildet, auf dem ein äußerer Rand des Klappenkörpers im geschlossenen Zustand der Klappe aufliegt. Somit wird eine zuverlässige Abdichtung auch bei verringerter Toleranzempfindlichkeit bei der Herstellung und dem Zusammenbau der Einzelteile erreicht.

Vorzugsweise sind ein zur Klappe stromabwärtiger Teil des Kanals und ein stromaufwärtiger Teil des Kanals in Höhe der Wellenachse radial versetzt zueinander angeordnet, wodurch gleiche Durchströmungsquerschnitte auch bei Verwendung des Absatzes im Kanal erreicht werden, so dass keine Änderung der Strömungscharakteristik vor und hinter dem Ventil bei geöffneter Klappe folgt.

Vorzugsweise teilt die Wellenachse den Klappenkörper in eine erste Klappenhälfte und eine zweite Klappenhälfte, wobei die erste Klappenhälfte auf einer Oberfläche des Absatzes aufliegt, die in Strömungsrichtung zeigt und die zweite Klappenhälfte auf einer Oberfläche des Absatzes aufliegt, die entgegen der Strömungsrichtung zeigt. So kann bei einer kostengünstig herzustellenden zentrisch gelagerten Klappe eine umlaufende Auflage auf einer Oberfläche zur Abdichtung hergestellt werden.

In einer besonders bevorzugten Weiterbildung der Erfindung ist der axiale Abstand der beiden Oberflächen des Absatzes geringer als die Dicke des Klappenkörpers, so dass bei senkrechter Stellung des Klappenkörpers im Kanal eine zusätzliche Anpresskraft auf die Oberfläche durch den Klappenkörper ausgeübt wird, was zu einer verbesserten Abdichtung im geschlossenen Zustand führt. Vor allem im Zusammenhang mit der größeren Elastizität im wellennahen Bereich kann so ein weitestgehend leckagefreier Verschluss bei geringen aufzubringenden Stellkräften erreicht werden. Des Weiteren wird ein Klappern der Klappe im Kanal verhindert.

Weiterhin weist der Klappenkörper im geschlossenen Zustand der Klappe zur radial angrenzenden Innenwand des Kanals vorzugsweise einen geringfügigen Abstand auf. Dies ermöglicht eine Herstellung der Bauteile mit den für die unterschiedlichen Temperaturdehnungen benötigten Toleranzen und stellt somit eine kostengünstige Herstellung und Montage sicher. Des Weiteren lässt sich je nach Abstand eine veränderte Durchflusscharakteristik bei kleinen Öffnungswinkeln erreichen.

Um die Anpresskraft tatsächlich vollstandig über den Rand des Klappenkörpers auf die Oberfläche des Absatzes ausüben zu können, sind die Stützscheiben vollständig innerhalb des Innenumfangs des Absatzes angeordnet. Somit ist die aufgebrachte Anpresskraft nicht begrenzt.

Es wird somit eine Ventilvorrichtung geschaffen, mit der eine dichte Anlage der Klappe über den gesamten Klappenumfang bei geringen aufzubringenden Drehmomenten erreicht wird. Die Klappe ist kostengünstig herstellbar und montierbar, da keine engen Toleranzen einzuhalten sind. Diese Ventilvorrichtung neigt weder zum Verklemmen noch zum Verkleben.

Ein Ausführungsbeispiel einer erfindungsgemäßen Ventilvorrichtung ist in den Figuren dargestellt und wird nachfolgend beschrieben.
Figur 1 zeigt eine Draufsicht auf eine erfindungsgemäße Ventilvorrichtung.
Figur 2 zeigt eine Seitenansicht der erfindungsgemäßen Ventilvorrichtung gemäß Figur 1 in geschnittener Darstellung.

Die erfindungsgemäße Ventilvorrichtung weist ein Gehäuse 2 auf, in dem ein Kanal 4 ausgebildet ist, der beispielsweise von Abgas durchströmt wird. Im Innern des Kanals 4 ist eine Klappe 6 zur Regelung des Durchströmungsquerschnitts angeordnet, die über einen nicht dargestellten Aktor betätigbar ist. Dazu ist der Aktor mit einer Welle 8 verbunden, die in Lagerstellen 14 im Gehäuse 2 gelagert ist.

Eine Welle 8 ragt beidseitig des Kanals 4 durch Wellendurchtritte 10 in einer Wand 12 des Gehäuses 2 auf gegenüberliegenden Seiten des Kanals 4 in die Lagerstellen 14, wobei eine Wellenachse 16, um die die Klappe 6 drehbar ist, den Kanal 4 in zwei Hälften teilt.

Die Klappe 6 im Innern des Kanals 4 weist zwei biegesteife Stützscheiben 18, 20 sowie einen zwischen den Stützscheiben 18, 20 angeordneten elastischen Klappenkörper 22 aus Federstahl auf. Die beiden Stützscheiben 18, 20 und der Klappenkörper 22 liegen unmittelbar aufeinander und sind in einem Schlitz 24 in der Welle 8 angeordnet und über Schrauben 26 befestigt.

Im geschlossenen Zustand der Klappe 6 liegt ein äußerer Rand 28 des Klappenkörpers 22 auf einem im Gehäuse 2 ausgebildeten Absatz 30 auf. Die Klappe 6 wird durch die Wellenachse 16 in eine erste Hälfte 32 und eine zweite Hälfte 34 geteilt, wobei die erste Hälfte 32 mit ihrem Rand auf einer ersten Oberfläche 36 des Absatzes 30 aufliegt, die zu einem stromabwärtigen Teil 38 des Kanals 4 weist und die zweite Hälfte 34 mit ihrem Rand auf einer zweiten Oberfläche 40 des Absatzes 30 aufliegt, die zu einem stromaufwärtigen Teil 42 des Kanals 4 weist. Daraus folgt auch, dass der stromabwärtige Teil 38 zum stromaufwärtigen Teil 42 in Höhe der Wellenachse 16 einen radialen Versatz aufweist, um gleiche Durchströmungsquerschnitte der beiden Kanalteile 38, 42 zu erhalten. Zwischen der radial angrenzenden inneren Wand 12 des Kanals 4 und dem Rand 28 des Klappenkörpers 22 verbleibt ein geringer Abstand, da eine zuverlässige und weitestgehend leckagefreie Abdichtung bereits durch die Anlage des Klappenkörpers 22 auf dem Absatz 30 sichergestellt ist. Hingegen sind die beiden Stützscheiben 18, 20 lediglich so groß, dass ihre gesamte Fläche im geschlossenen Zustand innerhalb des Durchströmungsquerschnitts des stromabwärtigen Teils 38 und des stromaufwärtigen Teils 42 des Kanals 4 angeordnet ist, so dass in radialer Richtung die Stützscheiben 18, 20 vor den Oberflächen 36, 40 des Absatzes 30 enden.

Der Abstand der Oberflächen 36, 40 des Absatzes 30 ist im dargestellten. Ausführungsbeispiel kleiner als die Dicke des Klappenkörpers 22 und der axiale Abstand dieser beiden Oberflächen 36, 40 zur Wellenachse 16 ist gleich groß, so dass bei zur Wellenachse 16 senkrechter Lage der Klappe 6 der Klappenkörper 22 mit seinem Rand 28 mit einer Federkraft gegen die Oberflächen 36, 40 gedrückt wird, was zu einer weiteren Verbesserung der Dichtigkeit im geschlossenen Zustand führt.

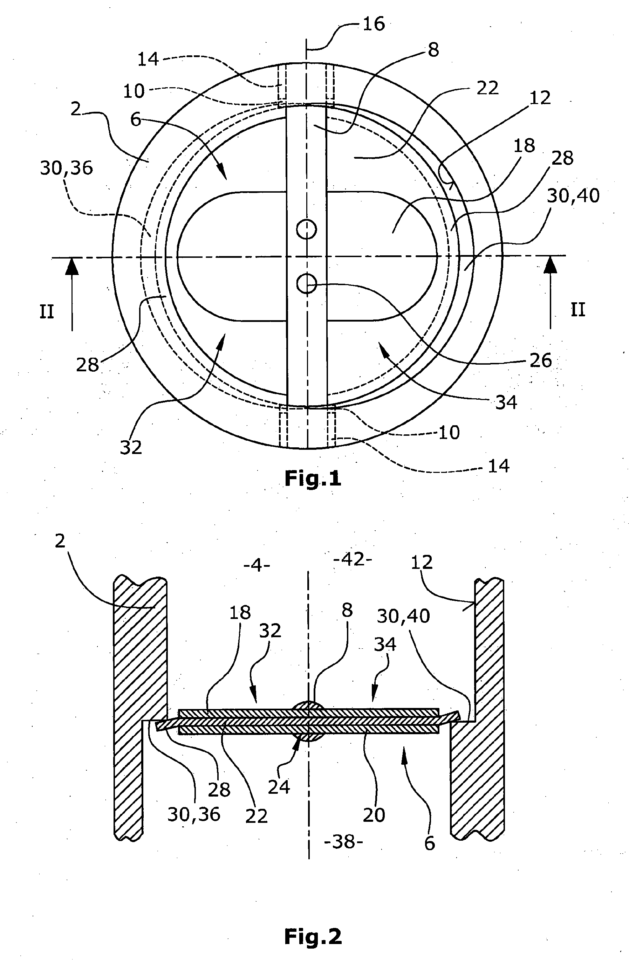

Im vorliegenden Ausführungsbeispiel ist der Kanal 4 im Querschnitt ebenso wie der Klappenkörper 22 kreisförmig ausgebildet. Die Stützscheiben 18, 20 sind hingegen, wie aus Figur 1 deutlich wird, etwa in Form eines in einer Richtung gedehnten Kreises ausgebildet, wobei die größte Ausdehnung der Ellipse senkrecht zur Wellenachse 16 ausgebildet ist und die kleinste Ausdehnung der Ellipse in Höhe der Wellenachse 16 vorhanden ist. Daraus folgt, dass der Abstand zwischen dem Außenumfang des elastischen Kappenkörpers 22 und dem Außenumfang der Stützscheiben 18, 20 im Bereich der Wellenachse 16 am größten ist und bei einem Winkel von 90° zur Wellenachse 16 am kleinsten ist. Des

Weiteren wird der Anteil der nicht bedeckten Fläche des Klappenkörper 22 zur Gesamtfläche des Kappenkörpers 22 mit steigendem Abstand von der Wellenachse 16 bis zum Ende der Stützscheiben 18, 20 kleiner. Anders ausgedrückt verringert sich erfindungsgemäß der Abstand zwischen dem Außenumfang des elastischen Klappenkörpers 22 und dem Außenumfang der Stützscheiben 18, 20 mit steigendem Winkel zum Schnittpunkt zwischen der Wellenachse 16 und der Kanalachse, wodurch die Elastizität der Klappe 6 mit steigendem Winkel fällt.

Aus alledem folgt, dass die Klappe 6 im Bereich der Wellenachse 16 eine höhere Elastizität aufweist als im von der Wellenachse 16 entfernten Bereich. Somit kann aufgrund des kurzen Hebelarms im achsnahen Bereich mit relativ geringen Drehmomenten der Klappenkörper 22 beim Anlegen an die Oberfläche 36, 40 des Absatzes 30 verformt werden, wodurch eine hohe Dichtigkeit bei geringen Stellkräfte erreicht wird. Die Klappe wird dabei über den gesamten Umfang in Anlage an die Oberflächen 36, 40 gebracht, wodurch die Leckage der Ventilvorrichtung minimiert wird. Gleichzeitig wird durch dieses Verspannen ein Klappern der Klappe 6 im Kanal 4 aufgrund auftretender Druckpulsationen verhindert. Durch eine geschickte Wahl des Abstandes des Klappenkörpers 22 von der angrenzenden Innenwand 12 des Kanals 4 lässt sich zusätzlich die Durchflusscharakteristik im Bereich kleiner Anstellwinkel anpassen. Die Toleranzempfindlichkeit ist im Vergleich zu bekannten Ausführungen deutlich geringer, so dass die Ventilvorrichtung kostengünstig hergestellt werden kann.

Es sollte deutlich sein, dass der Schutzbereich der vorliegenden Anmeldung nicht auf das beschriebene Ausführungsbeispiel begrenzt ist. Bezüglich der genauen Formgestaltung sind innerhalb des Schutzbereiches verschiedene konstruktive Modifikationen beispielsweise bezüglich des Abstandes der Oberflächen des Absatzes zueinander oder der genauen Formgestaltung der Stützscheiben möglich. Auch ist es denkbar eine solche Klappe in nicht runden Kanälen entsprechend auszugestalten.

## Patentansprüche

1. Ventilvorrichtung zur Regelung eines Abgasstroms einer Verbrennungskraftmaschine mit
einer Welle (8), die drehbar um eine Wellenachse (16) in einem einen durchströmbaren Kanal (4) bildenden Gehäuse (2) gelagert ist, einer Klappe (6), die mit der Welle (8) verbunden ist und über die der Durchströmungsquerschnitt des Kanals (4) regelbar ist,
wobei die Klappe (6) zwei biegesteife Stützscheiben (18, 20) mit einem ersten Umfang und einen zwischen den Stützscheiben (18, 20) angeordneten, elastischen Klappenkörper (22) mit einem allseitig größeren Umfang aufweist,
**dadurch gekennzeichnet, dass**
der Abstand zwischen dem Außenumfang des elastischen Klappenkörpers (22) und dem Außenumfang der Stützscheiben (18, 20) im Bereich der Wellenachse (16) am größten ist und bei einem Winkel von 90° zur Wellenachse (16) am kleinsten ist.

2. Ventilvorrichtung zur Regelung eines Abgasstroms einer Verbrennungskraftmaschine nach Anspruch 1,
**dadurch gekennzeichnet, dass**
sich der Abstand zwischen dem Außenumfang des elastischen Klappenkörpers (22) und dem Außenumfang der Stützscheiben (18, 20) mit steigendem Winkel zum Schnittpunkt der Wellenachse (16) und der Kanalachse verringert.

3. Ventilvorrichtung zur Regelung eines Abgasstroms einer Verbrennungskraftmaschine nach einem der Ansprüche 1 oder 2,
**dadurch gekennzeichnet, dass**
der Kanal (4) und der Klappenkörper (22) im Querschnitt kreisförmig sind und die Stützscheiben (18, 20) elliptisch oder in Form eines in einer Richtung gedehnten Kreises ausgebildet sind.

4. Ventilvorrichtung zur Regelung eines Abgasstroms einer Verbrennungskraftmaschine nach einem der vorhergehenden Ansprüche,
**dadurch gekennzeichnet, dass**
der Klappenkörper (22) aus temperaturfestem Federstahl ist.

5. Ventilvorrichtung zur Regelung eines Abgasstroms einer Verbrennungskraftmaschine nach einem der vorhergehenden Ansprüche,
**dadurch gekennzeichnet, dass**
im Gehäuse (2) ein Absatz (30) ausgebildet ist, auf dem ein äußerer Rand (28) des Kläppenkörpers (22) im geschlossenen Zustand der Klappe (6) aufliegt.

6. Ventilvorrichtung zur Regelung eines Abgasstroms einer Verbrennungskraftmaschine nach Anspruch 5,
**dadurch gekennzeichnet, dass**
ein zur Klappe (6) stromabwärtiger Teil (42) des Kanals (2) und ein stromaufwärtiger Teil (38) des Kanals (2) in Höhe der Wellenachse (16) radial versetzt zueinander angeordnet sind.

7. Ventilvorrichtung zur Regelung eines Abgasstroms einer Verbrennungskraftmaschine nach Anspruch 6,
**dadurch gekennzeichnet, dass**
die Wellenachse (16) den Klappenkörper (22) in eine erste Klappenhälfte (32) und eine zweite Klappenhälfte (34) teilt, wobei die erste Klappenhälfte (32) auf einer Oberfläche (36) des Absatzes (30) aufliegt, die in Strömungsrichtung zeigt und die zweite Klappenhälfte (34) auf einer Oberfläche (40) des Absatzes (30) aufliegt, die entgegen der Strömungsrichtung zeigt.

8. Ventilvorrichtung zur Regelung eines Abgasstroms einer Verbrennungskraftmaschine nach Anspruch 6,
**dadurch gekennzeichnet, dass**
der axiale Abstand der beiden Oberflächen (36, 40) des Absatzes (30) geringfügig kleiner ist als die Dicke des Klappenkörpers (22).

9. Ventilvorrichtung zur Regelung eines Abgasstroms einer Verbrennungskraftmaschine nach einem der vorhergehenden Ansprüche,
**dadurch gekennzeichnet, dass**
der Klappenkörper (22) im geschlossenen Zustand der Klappe (6) zur radial angrenzenden Wand (12) des Kanals (2) einen Abstand aufweist.

10. Ventilvorrichtung zur Regelung eines Abgasstroms einer Verbrennungskraftmaschine nach einem der vorhergehenden Ansprüche,
**dadurch gekennzeichnet, dass**
die Stützscheiben (18, 20) vollständig innerhalb des Innenumfangs des Absatzes (30) angeordnet sind.

## Claims

1. A valve device for controlling an exhaust gas flow of an internal combustion engine, comprising:
a shaft (8) supported for rotation about a shaft axis (16) in a housing (2) forming a channel (4) adapted to be flown through,
a flap (6) connected to the shaft (8) and by which the flow cross section of the channel (4) can be controlled,
the flap (6) comprising two flexurally rigid support plates (18, 20) with a first periphery and an elastic flap body (22) arranged between the support plates (18, 20), the elastic flap body having a periphery larger on all sides,
**characterized in that**
a distance between the outer periphery of the elastic flap body (22) and the outer periphery of the support plates (18, 20) is largest in an area of the shaft axis (16), and smallest at an angle of 90° relative to the shaft axis (16).

2. The valve device for controlling an exhaust gas flow of an internal combustion engine as recited in claim 1, **characterized in that** the distance between the outer periphery of the elastic flap body (22) and the outer periphery of the support plates (18, 20) decreases with an increasing angle relative to a point of intersection of the shaft axis (16) and the channel axis.

3. The valve device for controlling an exhaust gas flow of an internal combustion engine as recited in claim 1 or 2, **characterized in that** the channel (4) and the flap body (22) comprise a circular cross section and the support plates (18, 20) are elliptical or shaped as a circle expanded in a direction.

4. The valve device for controlling an exhaust gas flow of an internal combustion engine as recited in one of the preceding claims, **characterized in that** the flap body (22) is made of temperature-resistant spring steel.

5. The valve device for controlling an exhaust gas flow of an internal combustion engine as recited in one of the preceding claims, **characterized in that** the housing (2) has a ledge (30) formed therein, on which an outer edge (28) of the flap body (22) is supported when the flap (6) is in a closed state.

6. The valve device for controlling an exhaust gas flow of an internal combustion engine as recited in claim 5, **characterized in that** a section (42) of the channel (4) disposed downstream relative to the flap (6) and a section (38) of the channel (4) disposed upstream are disposed at a radial offset relative to each other at the level of the shaft axis (16).

7. The valve device for controlling an exhaust gas flow of an internal combustion engine as recited in claim 6, **characterized in that** the flap body (22) is divided into a first flap half (32) and a second flap half (34) by the shaft axis (16), wherein the first flap half (32) is supported on a surface (36) of the ledge (30) directed in the flow direction, and the second flap half (34) is supported on a surface (40) of the ledge (30) directed opposite to the flow direction.

8. The valve device for controlling an exhaust gas flow of an internal combustion engine as recited in claim 6, wherein an axial distance between the two surfaces (36, 40) of the kedge (30) is slightly smaller than a thickness of the flap body (22).

9. The valve device for controlling an exhaust gas flow of an internal combustion engine as recited in one of the preceding claims, **characterized in that**, in the closed state of the flap (6), the flap body (22) is at a distance to the radially adjacent wall (12) of the channel (4).

10. The valve device for controlling an exhaust gas flow of an internal combustion engine as recited in one of the preceding claims, **characterized in that** the supporting discs (18, 20) are arranged entirely within the inner periphery of the ledge (30).

## Revendications

1. Dispositif à soupape destiné à réguler un flux de gaz d'échappement d'un moteur à combustion interne, comprenant
un arbre (8) supporté de manière rotative autour un axe de l'arbre (16) dans un conduit (4), apte à être traversé par un écoulement, conduit formant carter (2),
un clapet (6), qui est relié à l'arbre (8) et par lequel la section transversale d'écoulement du conduit (4) peut être régulée,
ledit clapet (6) comprenant deux disques de support (18, 20), rigides à la flexion, comprenant une première circonférence et un corps de clapet (22) élastique disposé entre les deux disques de support (18, 20), la circonférence du corps de clapet étant plus grande de tout part,
**caractérisé en ce que**
la distance entre la circonférence extérieure dudit corps de clapet (22) élastique et la circonférence extérieure des disques de support (18, 20) est la plus grande dans la région de l'axe de l'arbre (16) et est la plus petite à un angle de 90° par rapport à l'axe de l'arbre (16).

2. Dispositif à soupape destiné à réguler un flux de gaz d'échappement d'un moteur à combustion interne selon la revendication 1, **caractérisé en ce qu'**avec l'angle croissant, la distance entre la circonférence extérieure dudit corps de clapet (22) élastique et la circonférence extérieure des disques de support (18, 20) diminue par rapport à un point d'intersection de l'axe de l'arbre (16) et de l'axe du conduit.

3. Dispositif à soupape destiné à réguler un flux de gaz d'échappement d'un moteur à combustion interne selon une des revendications 1 ou 2, **caractérisé en ce que** le conduit (4) et ledit corps de clapet (22) sont circulaire en section transversale, et les disques de support (18, 20) sont elliptiques ou sous forme d'un cercle étendu dans une direction.

4. Dispositif à soupape destiné à réguler un flux de gaz d'échappement d'un moteur à combustion interne selon l'une quelconque des revendications précédentes, **caractérisé en ce que** le corps de clapet (22) est en acier à ressort résistant aux écarts de température.

5. Dispositif à soupape destiné à réguler un flux de gaz d'échappement d'un moteur à combustion interne selon l'une quelconque des revendications précédentes, **caractérisé en ce qu'**un épaulement (30) est formé dans le carter (2), sur lequel reste le bord extérieur (28) du corps de clapet (22) quand le clapet (6) est en état fermé.

6. Dispositif à soupape destiné à réguler un flux de gaz d'échappement d'un moteur à combustion interne selon la revendication 5, **caractérisé en ce qu'**une partie (42) du conduit (4) en aval par rapport au clapet (6) et une partie (38) du conduit (4) en amont sont disposées radialement décalées l'une par rapport à l'autre au niveau de l'axe de l'arbre (16).

7. Dispositif à soupape destiné à réguler un flux de gaz d'échappement d'un moteur à combustion interne selon la revendication 6, **caractérisé en ce que** l'axe de l'arbre (16) divise le corps de clapet (22) en une première moitié de clapet (32) et une deuxième moitié de clapet (34), la première moitié de clapet (32) restant sur une surface (36) dudit épaulement (30) qui est orientée dans la direction d'écoulement et la deuxième moitié de clapet (34) reste sur une surface (40) dudit épaulement (30) dirigée au sens opposé à la direction d'écoulement.

8. Dispositif à soupape destiné à réguler un flux de gaz d'échappement d'un moteur à combustion interne selon la revendication 6, **caractérisé en ce que** la distance axiale des deux surfaces (36, 40) dudit épaulement (30) est peu plus petite que l'épaisseur du corps de clapet (22).

9. Dispositif à soupape destiné à réguler un flux de gaz d'échappement d'un moteur à combustion interne selon l'une quelconque des revendications précédentes, **caractérisé en ce qu'**en état fermé du clapet (6), le corps de clapet (22) à une distance à la paroi (12) du conduit (4) radialement adjacente.

10. Dispositif à soupape destiné à réguler un flux de gaz d'échappement d'un moteur à combustion interne selon l'une quelconque des revendications précédentes, **caractérisé en ce que** les disques de support (18, 20) sont disposées entièrement au sein de la circonférence intérieure dudit épaulement (30).
